# EUROPÄISCHE PATENTSCHRIFT

(11) **EP 3 720 730 B1**
(45) Veröffentlichungstag und Bekanntmachung des Hinweises auf die Patenterteilung: **26.01.2022**
(21) Anmeldenummer: 18825879.2
(22) Anmeldetag: 05.12.2018
(51) Int. Cl.: B60K 6/387, B60K 6/48, B60K 6/547, B60K 6/365, F16H 3/66, B60W 20/10, B60K 6/38, F16H 3/44

(54) **GETRIEBE FÜR EIN KRAFTFAHRZEUG, ANTRIEBSSTRANG, SOWIE VERFAHREN ZUM BETRIEB EINES GETRIEBES**
TRANSMISSION FOR A MOTOR VEHICLE, DRIVE TRAIN AND METHOD FOR OPERATING A TRANSMISSION
TRANSMISSION POUR UN VÉHICULE AUTOMOBILE, CHAÎNE CINÉMATIQUE AINSI QUE PROCÉDÉ SERVANT À FAIRE FONCTIONNER UNE TRANSMISSION

(30) Priorität: 08.12.2017 DE 102017222300
(43) Veröffentlichungstag der Anmeldung: 14.10.2020
(73) Patentinhaber: ZF Friedrichshafen AG, 88046 Friedrichshafen (DE)
(72) Erfinder: BREHMER, Martin, 88069 Tettnang (DE); BECK, Stefan, 88097 Eriskirch (DE); FRITZER, Anton, 88677 Markdorf (DE); HENDRAWAN, Suryanto, 78467 Konstanz (DE); HORN, Matthias, 88069 Tettnang (DE); KALTENBACH, Johannes, 88048 Friedrichshafen (DE); KUBERCZYK, Raffael, 88212 Ravensburg (DE); MORAW, Jens, 88677 Markdorf (DE); NIEDERBRUCKER, Gerhard, 88045 Friedrichshafen (DE); RATTAY, Martin, 38855 Wernigerode (DE); REISCH, Matthias, 88214 Ravensburg (DE); RIEGER, Wolfgang, 88048 Friedrichshafen (DE); ROSEMEIER, Thomas, 88074 Meckenbeuren (DE); TURNER, Lara Ruth, 88090 Immenstaad (DE); UNSELD, Bernd, 88213 Ravensburg (DE); WARTH, Viktor, 88048 Friedrichshafen (DE); WECHS, Michael, 88138 Weißensberg (DE); ZIEMER, Peter, 88069 Tettnang (DE); BAYER, Oliver, 88131 Lindau (DE)
(74) Vertreter: ZF Friedrichshafen AG
(86) Internationale Anmeldenummer: PCT/EP2018/083561
(87) Internationale Veröffentlichungsnummer: WO 2019/110626

(56) Entgegenhaltungen:
- DE-A1-102013 201 182
- DE-A1-102015 204 573
- DE-A1-102015 218 990

## Beschreibung

Die Erfindung betrifft ein Getriebe für ein Kraftfahrzeug. Ein Getriebe bezeichnet hier insbesondere ein mehrgängiges Getriebe, bei dem eine Vielzahl von Gängen, also feste Übersetzungsverhältnisse zwischen der Antriebswelle und der Abtriebswelle des Getriebes, durch gangbildende Schaltelemente vorzugsweise automatisch schaltbar sind. Bei den gangbildenden Schaltelementen handelt es sich beispielsweise um Kupplungen oder Bremsen. Derartige Getriebe finden vor allem in Kraftfahrzeugen Anwendung, um die Drehzahl- und Drehmomentabgabecharakteristik der Antriebseinheit den Fahrwiderständen des Fahrzeugs in geeigneter Weise anzupassen. Die Erfindung betrifft ferner einen Antriebsstrang für ein Kraftfahrzeug mit einem solchen Getriebe, sowie ein Verfahren zum Betrieb eines solchen Getriebes oder eines solchen Antriebsstranges.

Die Patentanmeldung DE 10 2004 038 516 A1 offenbart ein derartiges Getriebe, welches eine Antriebswelle, eine Abtriebswelle, drei Planetenradsätze sowie sechs Schaltelemente umfasst. Durch selektives Schließen von drei der sechs Schaltelemente sind mehrere Gänge zwischen der Antriebswelle und der Abtriebswelle ausbildbar.

Aus der Patentanmeldung DE 10 2006 033 087 A1 ist bekannt, eine elektrische Maschine an die Antriebswelle eines Getriebes anzubinden, um ein mit dem Getriebe ausgestattetes Kraftfahrzeug mittels der elektrischen Maschine anzutreiben. Um einen Verbrennungsmotor des Kraftfahrzeugs bei einem solchen elektrischen Antrieb nicht mitzuschleppen ist eine Kupplung vorgesehen, welche den Verbrennungsmotor von der Antriebswelle trennt. Diese Kupplung vergrößert den Bauraumbedarf des Getriebes.

Die Patentanmeldung DE 10 2014 226 699 A1 schlägt eine alternative Anbindung des Elektromotors an das Getriebe vor. Der Elektromotor ist dabei mit einem Radsatzelement des Getriebes verbunden, welches mit der Antriebswelle über eine Lamellenkupplung verbunden ist. Die Lamellenkupplung dient zugleich als gangbildendes Schaltelement. Durch Offenhalten dieser Kupplung wird ein mit der Antriebswelle verbundener Verbrennungsmotor bei einem Antrieb mittels des Elektromotors nicht mitgeschleppt. Dies beschränkt jedoch die Zahl der Gangstufen, die für einen solchen elektrischen Antrieb zur Verfügung stehen.

Die Patentanmeldung DE 10 2015 218 990 A1 beschreibt ein Getriebe für ein Kraftfahrzeug mit einer Antriebswelle, einer Abtriebswelle, drei Planetenradsätzen und sechs Schaltelementen. Durch selektives Schließen von drei der sechs Schaltelemente sind sieben Vorwärtsgänge zwischen der Antriebswelle und der Abtriebswelle schaltbar.

Es ist nun Aufgabe der Erfindung ein Getriebe bereitzustellen, welches sich einerseits durch kompakte Außenabmessungen und andererseits durch eine höhere Verfügbarkeit des elektrischen Antriebs auszeichnet. Eine weitere Aufgabe ist es, ein geeignetes Betriebsverfahren für ein solches Getriebe bereitzustellen.

Die Aufgabe wird gelöst durch die Merkmale des Patentanspruchs 1. Patentanspruch 4 gibt eine Lösung der weiteren Aufgabe an. Vorteilhafte Ausgestaltungen ergeben sich aus den Unteransprüchen, der Beschreibung sowie aus den Figuren.

Es wird ein Getriebe für ein Kraftfahrzeug vorgeschlagen, welches eine Antriebswelle, eine Abtriebswelle, eine elektrische Maschine, mehrere gangbildende Schaltelemente, eine Mehrzahl von Planetenradsätzen sowie eine drehmomentübertragende Schnittstelle zu einem getriebe-externen Verbrennungsmotor aufweist. Die drehmomentübertragende Schnittstelle kann beispielsweise eine Steckverzahnung oder ein Flansch sein. Das Getriebe ist dazu eingerichtet, durch selektives Schließen der gangbildenden Schaltelemente eine Mehrzahl von Gängen zwischen der Antriebswelle und der Abtriebswelle bereitzustellen.

Die drehmomentübertragende Schnittstelle zum getriebe-externen Verbrennungsmotor ist mit der Antriebswelle ständig drehfest oder drehelastisch verbunden. In anderen Worten ist zwischen der Schnittstelle und der Antriebswelle keine schaltbare Kupplung vorgesehen. Es können ein oder mehrere Torsionsschwingungsdämpfer und/oder ein Drehschwingungstilger vorgesehen sein, um die drehelastische Verbindung bereitzustellen.

Durch Schließen eines ersten der gangbildenden Schaltelemente werden die Antriebswelle und ein Element eines der Planetenradsätze in eine feste Drehzahlbeziehung zueinander gebracht. In anderen Worten ist ein Drehzahlverhältnis zwischen dem vorgenannten Element und der Antriebswelle im geschlossenen Zustand des ersten gangbildenden Schaltelements stets konstant. Das Drehzahlverhältnis kann den Wert Eins oder davon abweichende Werte annehmen. Ist das erste gangbildende Schaltelement geöffnet, so besteht keine Zwangsbeziehung zwischen den Drehzahlen des vorgenannten Elements und der Antriebswelle. Das erste gangbildende Schaltelement ist als kraftschlüssiges Schaltelement mit variabler Drehmomentübertragungsfähigkeit ausgebildet, also beispielsweise als Lamellenschaltelement.

Ein anderes Element eines der Planetenradsätze ist mit einem Rotor der elektrischen Maschine ständig verbunden. Eine ständige Verbindung wird als Verbindung zwischen zwei Elementen bezeichnet, die stets besteht. Derart ständig verbundene Elemente drehen stets mit der gleichen Abhängigkeit zwischen deren Drehzahlen. In einer ständigen Verbindung zwischen zwei Elementen kann sich kein Schaltelement befinden. Eine ständige Verbindung ist daher von einer schaltbaren Verbindung zu unterscheiden.

Erfindungsgemäß ist ein als formschlüssiges Schaltelement ausgebildetes Zusatzschaltelement vorgesehen, beispielsweise eine Klaue. Durch Schließen des Zusatzschaltelements werden der Rotor und die Antriebswelle in eine feste Drehzahlbeziehung zueinander gebracht. Ist das Zusatzschaltelement geöffnet, so besteht keine Zwangsbeziehung zwischen den Drehzahlen des vorgenannten anderen Elements und der Antriebswelle.

Das zusätzlich zu den gangbildenden Schaltelementen vorgesehene Zusatzschaltelement weist aufgrund der Ausgestaltung als formschlüssiges Schaltelement einen geringen Bauraumbedarf auf. Für einen Antrieb mittels der elektrischen Maschine ohne gleichzeitigen Antrieb der Antriebswelle ist gemäß einer nicht-erfindungsgemäßen Ausführung das erste gangbildendende Schaltelement offen zu halten. Da der Rotor jedoch gemäß der nicht-erfindungsgemäßen Ausführung auf ein anderes Radsatzelement wirkt als das erste gangbildende Schaltelement, kann die Verfügbarkeit des Getriebes für einen Antrieb der Abtriebswelle mittels der elektrischen Maschine ohne gleichzeitigen Antrieb der Antriebswelle verbessert werden.

Gemäß einer nicht-erfindungsgemäßen Ausführung besteht zwischen der Antriebswelle und den Planetenradsätzen keine ständige Verbindung. In anderen Worten ist zwischen der Antriebswelle und den Planetenradsätzen nur eine schaltbare Verbindung vorgesehen. Es können auch mehrere schaltbare Verbindungen zwischen der Antriebswelle und den Planetenradsätzen vorgesehen sein. Dadurch kann die Verfügbarkeit des Getriebes für einen Antrieb der Abtriebswelle mittels der elektrischen Maschine ohne gleichzeitigen Antrieb der Antriebswelle verbessert werden. Erfindungsgemäß besteht zwischen der Antriebswelle und einem Element eines der Planetenradsätze eine ständige Verbindung. In diesem Fall ist durch Schließen des Zusatzschaltelements ein anderes Element desselben Planetenradsatzes drehfest festsetzbar. Das Zusatzschaltelement ist somit als Bremse ausgeführt, wodurch der Bauaufwand des Getriebes reduziert werden kann. Erst durch Schließen des Zusatzschaltelements wird Drehmoment zwischen den Elementen des beteiligten Planetenradsatzes übertragen, welcher vorzugsweise das Element aufweist, mit dem der Rotor ständig verbunden ist.

Das Getriebe kann Bestandteil eines Antriebsstrangs für ein Kraftfahrzeug sein. Der Antriebsstrang weist neben dem Getriebe auch einen Verbrennungsmotor auf. Die Abtriebswelle des Getriebes kann mit einem getriebe-internen oder getriebe-externen Differentialgetriebe wirkverbunden sein, welches mit Rädern des Kraftfahrzeugs wirkverbunden ist. Ein solcher Antriebsstrang ermöglicht mehrere Antriebsmodi des Kraftfahrzeugs. In einem elektrischen Fahrbetrieb wird das Kraftfahrzeug von der elektrischen Maschine des Getriebes angetrieben. In einem verbrennungsmotorischen Betrieb wird das Kraftfahrzeug vom Verbrennungsmotor angetrieben. In einem hybridischen Betrieb wird das Kraftfahrzeug sowohl vom Verbrennungsmotor als auch von der elektrischen Maschine des Getriebes angetrieben.

Das Getriebe ist dazu eingerichtet, durch selektives Schließen der gangbildenden Schaltelemente eine Mehrzahl von Gängen zwischen der Antriebswelle und der Abtriebswelle bereitzustellen. Gemäß einem bevorzugten Betriebsverfahren ist das Zusatzschaltelement in all diesen Gängen geschlossen. Dadurch wird gewährleistet, dass die elektrische Maschine in all diesen Gängen Leistung in den Antriebsstrang abgeben, bzw. von diesem aufnehmen kann.

Das Getriebe ist dazu eingerichtet, durch selektives Schließen einer Auswahl der gangbildenden Schaltelemente zumindest eine Gangstufe zwischen dem Rotor und der Abtriebswelle bereitzustellen. Bevorzugt können mehrere solche Gangstufen zwischen dem Rotor und der Abtriebswelle bereitgestellt werden. Gemäß einem nicht-erfindungsgemäßen Betriebsverfahren ist das Zusatzschaltelement in der zumindest einen Gangstufe, bevorzugt in all den Gangstufen geöffnet.

Ausgehend von einem Betrieb des Getriebes in einer zuvor genannten Gangstufe kann in dem nicht erfindungsgemäßen Betriebsverfahren ein mit der Antriebswelle drehelastisch verbundener Verbrennungsmotor vom Stillstand auf eine Startdrehzahl beschleunigt werden, indem das erste gangbildende Schaltelement zumindest teilweise geschlossen wird. Dadurch kann der Verbrennungsmotor gestartet werden.

Gemäß einer nicht erfindungsgemäßen Ausführung wird das erste gangbildende Schaltelement erst dann vollständig geschlossen, wenn nach erfolgter Beschleunigung des Verbrennungsmotors auf die Startdrehzahl das Zusatzschaltelement geschlossen ist. Unter "vollständigem Schließen" wird ein Vorgang verstanden, bei dem das Schaltelement so angesteuert wird, dass es ein hohes Maß an Drehmoment bei keiner oder nur geringer Differenzdrehzahl überträgt. Im Gegensatz dazu ist bei einem teilweisen Schließen des Schaltelements die Ausbildung einer Differenzdrehzahl ausdrücklich erwünscht, beispielsweise größer als 30 Umdrehungen pro Minute. Für das Schließen des Zusatzschaltelements müssen die über das Zusatzschaltelement verbundenen Getriebeelemente die gleiche Drehzahl aufweisen. Die dafür erforderliche Synchronisation kann durch entsprechende Steuerung des Verbrennungsmotors und/oder der elektrischen Maschine erfolgen.

Vorzugsweise erfolgt in dieser nicht erfindungsgemäßen Ausführung das vollständige Schließen des ersten gangbildenden Schaltelements im Zuge eines Schaltvorgangs des Getriebes, bei dem ein weiteres der gangbildenden Schaltelemente geöffnet wird. Dadurch kann ausgehend von der zuvor eingelegten Gangstufe auf beispielsweise einen höheren Gang geschaltet werden, um eine Drehzahl des Verbrennungsmotors gering zu halten.

Gemäß einer alternativen nicht erfindungsgemäßen Ausgestaltung wird das erste gangbildende Schaltelement nach der Beschleunigung des Verbrennungsmotors auf dessen Startdrehzahl vollständig geschlossen, wobei nachfolgend eines der an der zuvor eingelegten Gangstufe beteiligten gangbildenden Schaltelemente geöffnet wird. Das Zusatzschaltelement bleibt hierbei geöffnet. Dadurch kann ausgehend von einem rein elektrischen Antrieb der Abtriebswelle in einen hybridischen Betriebsmodus gewechselt werden, bei dem eine Leistungsverzweigung zwischen Abtriebswelle, Verbrennungsmotor und elektrischer Maschine erfolgt. In einem solchen Betriebsmodus ist ein stufenloser Betrieb des Getriebes möglich.

Zur Steuerung der oben genannten Verfahren kann ein elektronisches Steuergerät vorgesehen sein, dass zumindest mit dem Getriebe, bevorzugt auch mit dem Verbrennungsmotor in Kommunikationsverbindung steht.

Ein Ausführungsbeispiel der Erfindung ist nachfolgend anhand der beigefügten Figuren detailliert beschrieben. Es zeigen:
Fig. 1 ein Getriebe gemäß einem ersten nicht-erfindungsgemäßen Ausführungsbeispiel;
Fig. 2 ein Schaltschema für das Getriebe gemäß dem ersten Ausführungsbeispiel;
Fig. 3 und Fig. 4 je ein Getriebe gemäß einem zweiten nicht-erfindungsgemäßen und einem erfindungsgemäßen Ausführungsbeispiel;
Fig. 5 ein Schaltschema für die Getriebe gemäß Fig. 3; und
Fig. 6 einen Antriebsstrang für ein Kraftfahrzeug.

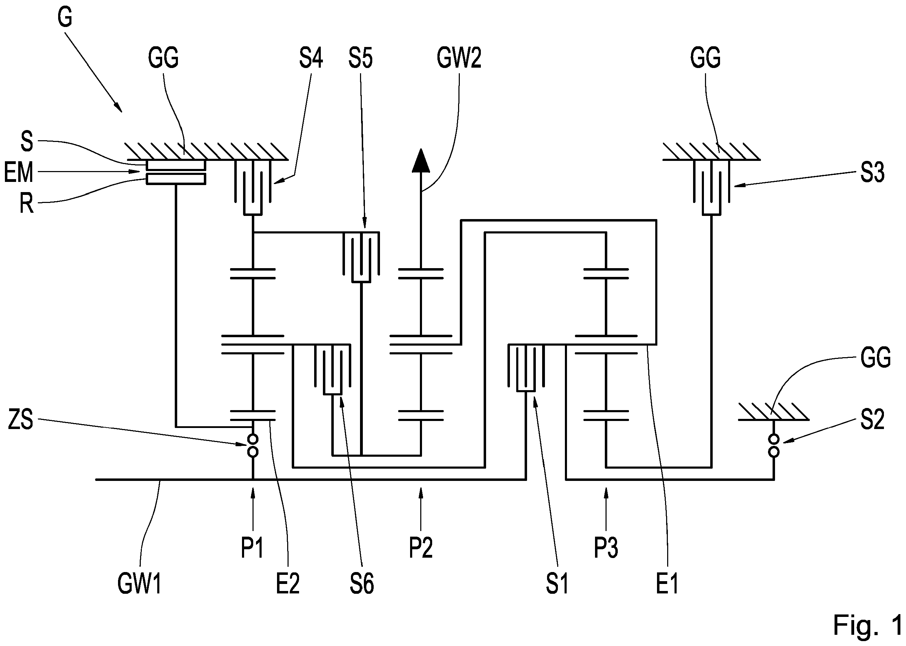

Fig. 1 zeigt ein Getriebe G gemäß einem ersten nicht-erfindungsgemäßen Ausführungsbeispiel. Das Getriebe G weist eine Antriebswelle GW1, eine Abtriebswelle GW2, einen ersten Planetenradsatz P1, einen zweiten Planetenradsatz P2, einen dritten Planetenradsatz P3 und eine elektrische Maschine EM auf. Die elektrische Maschine EM umfasst einen drehfesten Stator S und einen drehbaren Rotor R.

Die Antriebswelle GW1 ist mit keinem der Planetenradsätze P1, P2, P3 ständig verbunden. Stattdessen ist die Antriebswelle GW1 durch Schließen eines ersten gangbildenden Schaltelements S1 mit einem Steg E1 des dritten Planetenradsatzes P3 verbindbar, welcher mit einem Steg des zweiten Planetenradsatzes P2 ständig verbunden ist. Ein Steg des ersten Planetenradsatzes P1 ist mit einem Hohlrad des dritten Planetenradsatzes P3 ständig verbunden. Die Abtriebswelle GW2 ist mit einem Hohlrad des zweiten Planetenradsatzes P2 ständig verbunden. Durch Schließen eines zweiten gangbildenden Schaltelements S2 ist der Steg E1 des dritten Planetenradsatzes P3 gegenüber einem Gehäuse GG drehfest festsetzbar. Das zweite gangbildende Schaltelement S2 ist als formschlüssiges Schaltelement ausgebildet. Durch Schließen eines dritten gangbildenden Schaltelements S3 ist ein Sonnenrad des dritten Planetenradsatzes P3 drehfest festsetzbar. Durch Schließen eines vierten gangbildenden Schaltelements S4 ist ein Hohlrad des ersten Planetenradsatzes P1 drehfest festsetzbar. Durch Schließen eines fünften gangbildenden Schaltelements S5 ist das Hohlrad des ersten Planetenradsatzes P1 mit einem Sonnenrad des zweiten Planetenradsatzes P2 verbindbar. Durch Schließen eines sechsten gangbildenden Schaltelements S6 ist das Sonnenrad des zweiten Planetenradsatzes P2 mit dem Steg des ersten Planetenradsatzes P1 verbindbar. Das erste sowie das dritte bis sechste gangbildende Schaltelement S1, S3, S4, S5, S6 sind als kraftschlüssige Schaltelemente ausgebildet. Der Rotor R der elektrischen Maschine EM ist mit einem Sonnenrad E1 des ersten Planetenradsatzes P1 ständig verbunden, und ist durch Schließen eines Zusatzschaltelements ZS mit der Antriebswelle GW1 verbindbar.

Das Zusatzschaltelements ZS ist als formschlüssiges Schaltelement ausgebildet.

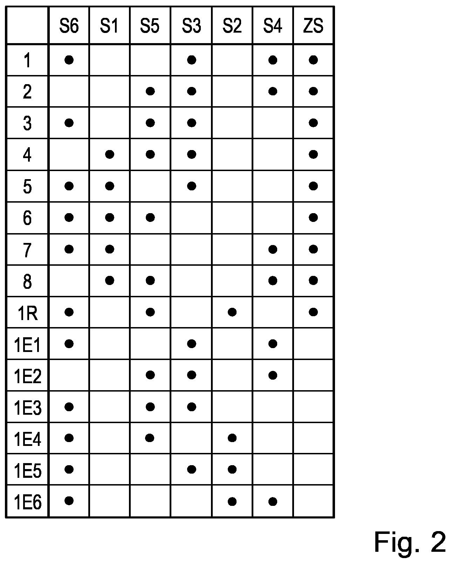

Fig. 2 zeigt ein Schaltschema für das Getriebe G gemäß dem ersten Ausführungsbeispiel. In den Zeilen des Schaltschemas sind Vorwärtsgänge 1 bis 8, ein Rückwärtsgang 1R sowie sechs Gangstufen 1E1, 1E2, 1E3, 1E4, 1E5, 1E6 angegeben. In den Spalten des Schaltschemas ist durch einen Kreis gekennzeichnet, welche der gangbildenden Schaltelemente S1, S2, S3, S4, S5, S6 und des Zusatzschaltelements ZS zur Bildung der Vorwärtsgänge 1 bis 8, des Rückwärtsgangs 1R und der Gangstufen 1E1, 1E2, 1E3, 1E4, 1E5, 1E6 zu schließen sind.

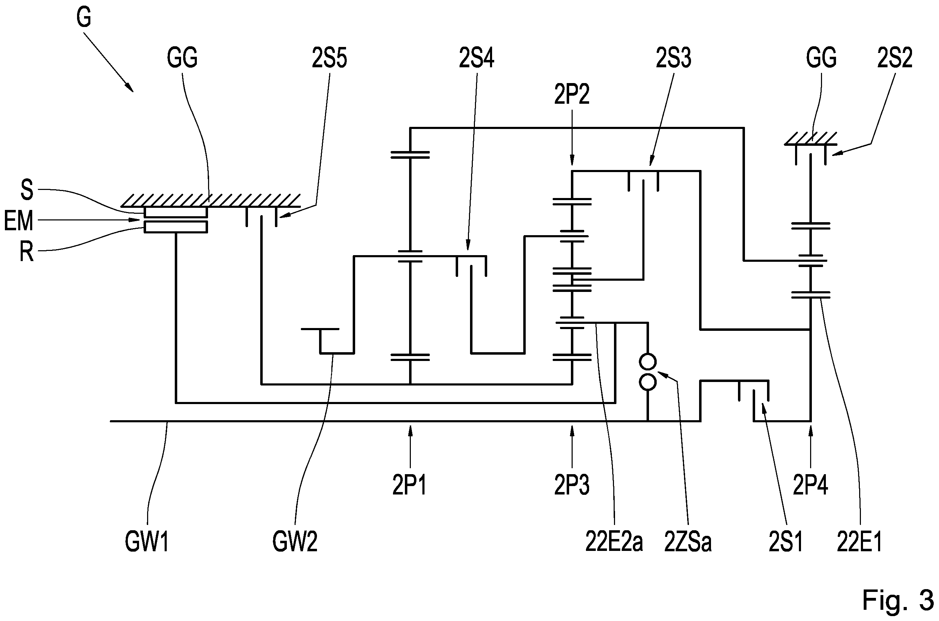

Fig. 3 zeigt ein Getriebe G gemäß einem zweiten nicht-erfindungsgemäßen Ausführungsbeispiel. Das Getriebe G weist eine Antriebswelle GW1, eine Abtriebswelle GW2, einen ersten Planetenradsatz 2P1, einen zweiten Planetenradsatz 2P2, einen dritten Planetenradsatz 2P3, einen vierten Planetenradsatz 2P4 und eine elektrische Maschine EM auf.

Die Antriebswelle GW1 ist mit keinem der vier Planetenradsätze 2P1, 2P2, 2P3, 2P4 ständig verbunden. Stattdessen ist die Antriebswelle GW1 durch Schließen eines ersten gangbildenden Schaltelements 2S1 mit einem Sonnenrad 22E1 des vierten Planetenradsatzes 2P4 verbindbar, welches mit einem Hohlrad des zweiten Planetenradsatzes 2P2 ständig verbunden ist. Die Abtriebswelle GW2 ist mit einem Steg des ersten Planetenradsatzes 2P1 ständig verbunden. Ein Sonnenrad des ersten Planetenradsatzes 2P1 ist mit einem Sonnenrad des dritten Planetenradsatzes 2P3 ständig verbunden. Ein Hohlrad des ersten Planetenradsatzes 2P1 ist mit einem Steg des vierten Planetenradsatzes 2P4 ständig verbunden. Ein Sonnenrad des zweiten Planetenradsatzes 2P2 ist mit einem Hohlrad des dritten Planetenradsatzes 2P3 ständig verbunden. Durch Schließen eines zweiten gangbildenden Schaltelements 2S2 ist ein Hohlrad des vierten Planetenradsatzes 2P4 gegenüber einem Gehäuse GG drehfest festsetzbar. Durch Schließen eines dritten gangbildenden Schaltelements 2S3 sind zwei Elemente des zweiten Planetenradsatzes 2P2 miteinander verbindbar, hier das Sonnenrad und das Hohlrad. Durch Schließen eines vierten gangbildenden Schaltelements 2S4 ist ein Steg des zweiten Planetenradsatzes 2P2 mit dem Steg des ersten Planetenradsatzes 2P1 verbindbar. Durch Schließen eines fünften gangbildenden Schaltelements 2S5 ist das Sonnenrad des ersten Planetenradsatzes P1 drehfest festsetzbar. Sämtliche gangbildenden Schaltelemente 2S1 bis 2S5 sind als kraftschlüssige Schaltelemente ausgebildet. Ein Rotor R der elektrischen Maschine EM ist mit einem Steg 22E2a des dritten Planetenradsatzes P3 ständig verbunden, und ist durch Schließen eines Zusatzschaltelements 2ZSa mit der Antriebswelle GW1 verbindbar. Das Zusatzschaltelements 2ZSa ist als formschlüssiges Schaltelement ausgebildet.

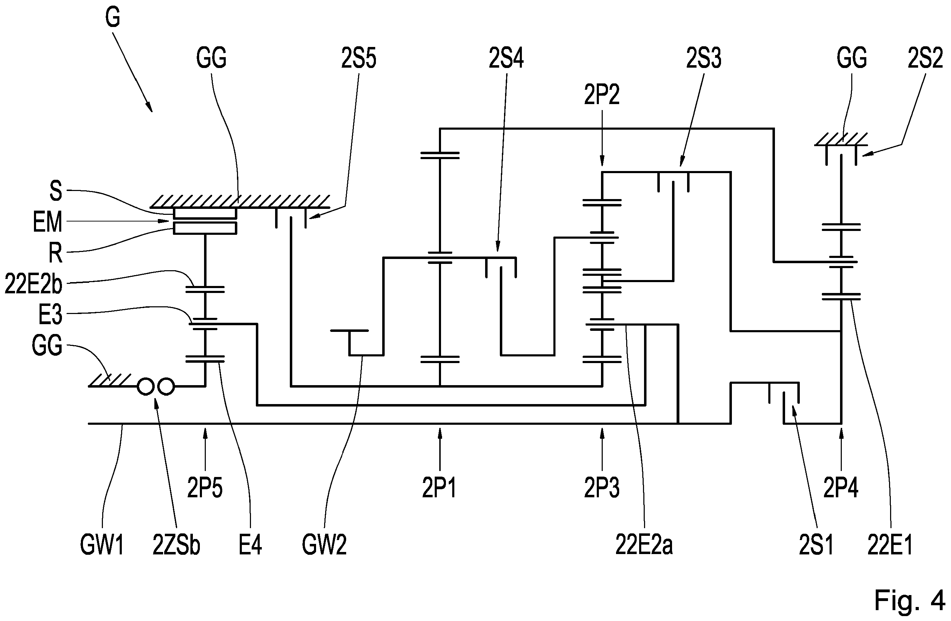

Fig. 4 zeigt ein Getriebe G gemäß einem erfindungsgemäßen Ausführungsbeispiel der Erfindung, welches dem in Fig. 3 dargestellten zweiten Ausführungsbeispiel im Wesentlichen entspricht. Das Getriebe G weist nun neben den vier Planetenradsätzen 2P1, 2P2, 2P3, 2P4 einen fünften Planetenradradsatz 2P5 auf. Die Antriebswelle GW1 ist mit dem Steg des dritten Planetenradsatzes 2P3 nun ständig verbunden, welcher mit einem Steg E3 des fünften Planetenradsatzes 2P5 ständig verbunden ist. Der Rotor R ist nun mit einem Hohlrad 22E2b des fünften Planetenradsatzes 2P5 ständig verbunden. Durch Schließen eines Zusatzschaltelements 2ZSb ist ein Sonnenrad E4 des fünften Planetenradsatzes 2P5 gegenüber dem Gehäuse GG drehfest festsetzbar. Durch Schließen des Zusatzschaltelements 2ZSb wird eine Drehmomentübertragung zwischen Sonnenrad E4, Steg E3 und Hohlrad 22E2b des fünften Planetenradsatzes 2P5 ermöglicht. Ist das Zusatzschaltelement 2ZSb geschlossen, so wird eine Drehzahl des Rotors R im Vergleich zu einer Drehzahl der Antriebswelle GW1 vergrößert.

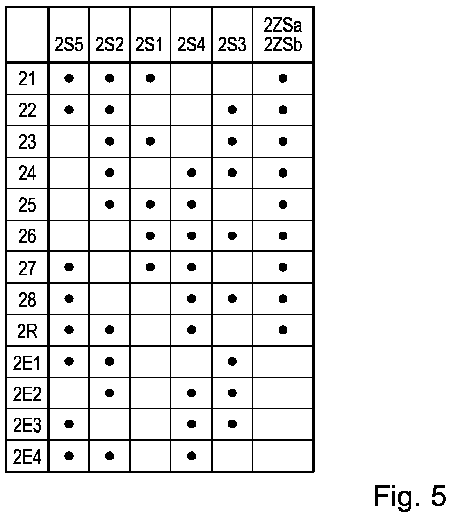

Fig. 5 zeigt ein Schaltschema, welches für das Getriebe G gemäß dem zweiten Ausführungsbeispiel anwendbar ist. In den Zeilen des Schaltschemas sind Vorwärtsgänge 21 bis 28, ein Rückwärtsgang 2R sowie vier Gangstufen 2E1, 2E2, 2E3, 2E4 angegeben. In den Spalten des Schaltschemas ist durch einen Kreis gekennzeichnet, welche der gangbildenden Schaltelemente 2S1, 2S2, 2S3, 2S4, 2S5 und des Zusatzschaltelements 2ZSa, 2ZSb zur Bildung der Vorwärtsgänge 21 bis 28, des Rückwärtsgangs 2R und der Gangstufen 2E1, 2E2, 2E3, 2E4 zu schließen sind.

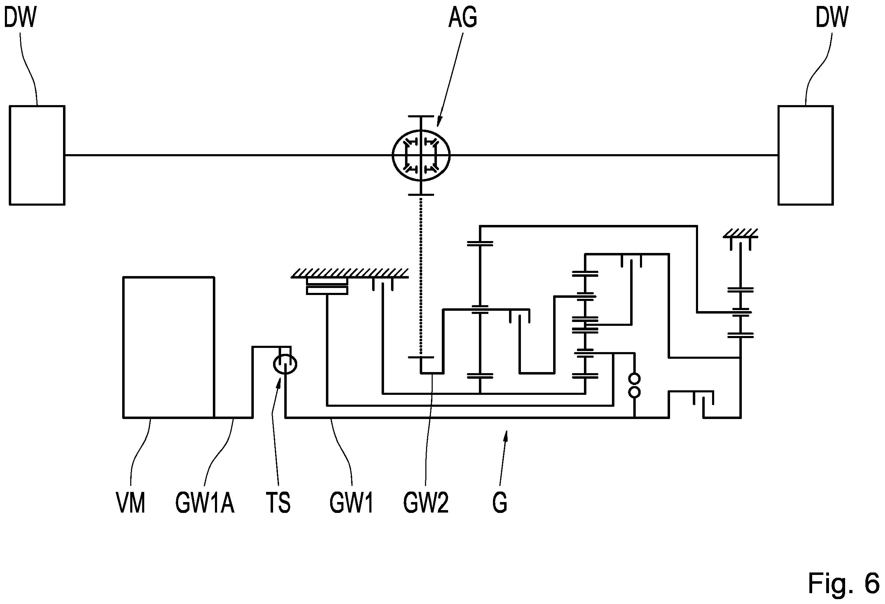

Fig. 6 zeigt einen Antriebsstrang für ein Kraftfahrzeug mit einem Getriebe G, welches beispielhaft dem in Fig. 3 dargestellten zweiten Ausführungsbeispiel entspricht. Die Antriebswelle GW1 ist über einen Torsionsschwingungsdämpfer TS mit einer drehmomentübertragenden Schnittstelle GW1A des Getriebes G verbunden, sodass die Schnittstelle GW1A und die Antriebswelle GW1 drehelastisch verbunden sind. Die Schnittstelle GW1A kann beispielsweise als eine Steckverzahnung oder als ein Flansch ausgebildet sein, woran eine Kurbelwelle eines getriebe-externen Verbrennungsmotors VM anschließbar ist. Die Abtriebswelle GW2 des Getriebes G ist mit einem Differentialgetriebe AG wirkverbunden, über welches die an der Abtriebswelle GW2 anliegende Leistung auf Antriebsräder DW des Kraftfahrzeugs verteilt wird.

### Bezugszeichen

- G: Getriebe
- GW1: Antriebswelle
- GW2: Abtriebswelle
- GW1A: Schnittstelle
- EM: Elektrische Maschine
- S: Stator
- R: Rotor
- P1: Erster Planetenradsatz
- P2: Zweiter Planetenradsatz
- P3: Dritter Planetenradsatz
- E1: Element
- E2: Element
- S1: Erstes gangbildendes Schaltelement
- S2: Zweites gangbildendes Schaltelement
- S3: Drittes gangbildendes Schaltelement
- S4: Viertes gangbildendes Schaltelement
- S5: Fünftes gangbildendes Schaltelement
- ZS: Zusatzschaltelement
- 1 bis 8: Gang
- 1R: Gang
- 1E1 bis 1E6: Gangstufe
- 2P1: Erster Planetenradsatz
- 2P2: Zweiter Planetenradsatz
- 2P3: Dritter Planetenradsatz
- 2P4: Vierter Planetenradsatz
- 2P5: Fünfter Planetenradsatz
- 22E1: Element
- 22E2a: Element
- 22E2b: Element
- E4: Element
- E5: Element
- 21 bis 28: Gang
- 2R: Gang
- 2E1 bis 1E4: Gangstufe
- 2ZSa, 2ZSb: Zusatzschaltelement
- VM: Verbrennungsmotor
- TS: Torsionsschwingungsdämpfer
- AG: Differentialgetriebe
- DW: Antriebsrad

## Patentansprüche

1. Getriebe (G) für ein Kraftfahrzeug, wobei das Getriebe (G) eine Antriebswelle (GW1), eine Abtriebswelle (GW2), eine elektrische Maschine (EM), eine drehmomentübertragende Schnittstelle (GW1A) zu einem getriebe-externen Verbrennungsmotor (VM) sowie eine Mehrzahl von Planetenradsätzen (P1-P3; 2P1-2P5) aufweist, wobei das Getriebe (G) dazu eingerichtet ist durch selektives Schließen von gangbildenden Schaltelementen (S1-S6; 2S1-2S5) eine Mehrzahl von Gängen (1-8, 1R; 21-28, 2R) zwischen der Antriebswelle (GW1) und der Abtriebswelle (GW2) bereitzustellen,
- wobei die drehmomentübertragende Schnittstelle (GW1A) mit der Antriebswelle (GW1) ständig drehfest oder drehelastisch verbunden ist,
- wobei durch Schließen eines ersten der gangbildenden Schaltelemente (S1, 2S1), welches als kraftschlüssiges Schaltelement mit variabler Drehmomentübertragungsfähigkeit ausgebildet ist, die Antriebswelle (GW1) und ein Element (E1, 22E1) eines der Planetenradsätze (P3; 2P4) in eine feste Drehzahlbeziehung zueinander bringbar sind,
- wobei ein anderes Element (E2, 22E2a, 22E2b) eines der Planetenradsätze (P1, 2P3, 2P5) mit einem Rotor (R) der elektrischen Maschine (EM) ständig verbunden ist,
- wobei durch Schließen eines Zusatzschaltelements (ZS, 2ZSa, 2ZSb), welches als formschlüssiges Schaltelement ausgebildet ist, der Rotor (R) und die Antriebswelle (GW1) in eine feste Drehzahlbeziehung zueinander bringbar sind,
**dadurch gekennzeichnet, dass** zwischen der Antriebswelle (GW1) und einem Element (E3) eines der Planetenradsätze (2P5) eine ständige Verbindung besteht, wobei durch Schließen des Zusatzschaltelements (2ZSb) ein anderes Element (E4) desselben Planetenradsatzes (2P5) drehfest festsetzbar ist.

2. Getriebe (G) nach Anspruch 1, **dadurch gekennzeichnet, dass** jener der Planetenradsätze (2P5), dessen Element (E3) mit der Antriebswelle (GW1) ständig verbunden ist, das Element (22E2b) aufweist, mit dem der Rotor (R) ständig verbunden ist.

3. Antriebsstrang für ein Kraftfahrzeug, **gekennzeichnet durch** ein Getriebe (G) gemäß einem der vorangehenden Ansprüche.

4. Verfahren zum Betrieb eines Getriebes (G) nach Anspruch 1 oder Anspruch 2 oder eines Antriebsstranges nach Anspruch 3, **dadurch gekennzeichnet, dass** durch selektives Schließen der gangbildenden Schaltelemente (S1-S6; 2S1-2S5) eine Mehrzahl von Gängen (1-8, 1R; 21-28, 2R) zwischen der Antriebswelle (GW1) und der Abtriebswelle (GW2) ausbildbar sind, wobei das Zusatzschaltelement (ZS, 2ZSa, 2ZSb) in jedem dieser Gänge (1-8, 1R; 21-28, 2R) geschlossen ist.

## Claims

1. Transmission (G) for a motor vehicle, wherein the transmission (G) has a input shaft (GW1), an output shaft (GW2), an electric machine (EM), a torque-transmitting interface (GW1A) to an internal combustion engine (VM) external to the transmission, and a multiplicity of planetary gear sets (P1-P3; 2P1-2P5), wherein the transmission (G) is configured to provide a multiplicity of gear ratios (1-8, 1R; 21-28, 2R) between the input shaft (GW1) and the output shaft (GW2) by selective closure of gear-ratio-forming shift elements (S1-S6; 2S1-2S5),
- wherein the torque-transmitting interface (GW1A) is permanently connected in rotationally conjoint or rotationally elastic fashion to the input shaft (GW1),
- wherein the input shaft (GW1) and an element (E1, 22E1) of one of the planetary gear sets (P3; 2P4) can be placed in a fixed rotational speed relationship with respect to one another by closure of a first of the gear-ratio-forming shift elements (S1, 2S1), which is configured as a non-positively locking shift element with variable torque-transmitting capability,
- wherein another element (E2, 22E2a, 22E2b) of one of the planetary gear sets (P1, 2P3, 2P5) is permanently connected to a rotor (R) of the electric machine (EM),
- wherein the rotor (R) and the input shaft (GW1) can be placed in a fixed rotational speed relationship with respect to one another by closure of an auxiliary shift element (ZS, 2ZSa, 2ZSb), which is configured as a positively locking shift element,
**characterized in that** there is a permanent connection between the input shaft (GW1) and an element (E3) of one of the planetary gear sets (2P5), wherein another element (E4) of the same planetary gear set (2P5) can be rotationally fixedly immobilized by closure of the auxiliary shift element (2ZSb).

2. Transmission (G) according to Claim 1, **characterized in that** that one of the planetary gear sets (2P5) whose element (E3) is permanently connected to the input shaft (GW1) has the element (22E2b) to which the rotor (R) is permanently connected.

3. Drivetrain for a motor vehicle, **characterized by** a transmission (G) according to either one of the preceding claims.

4. Method for operating a transmission (G) according to Claim 1 or Claim 2 or a drivetrain according to Claim 3, **characterized in that** a multiplicity of gear ratios (1-8, 1R; 21-28, 2R) between the input shaft (GW1) and the output shaft (GW2) can be formed by selective closure of the gear-ratio-forming shift elements (S1-S6; 2S1-2S5), wherein the auxiliary shift element (ZS, 2ZSa, 2ZSb) is closed in each of these gear ratios (1-8, 1R; 21-28, 2R).

## Revendications

1. Transmission (G) pour un véhicule automobile, la transmission (G) comprenant un arbre d'entraînement (GW1), un arbre de sortie (GW2), une machine électrique (EM), une interface (GW1A) de transmission de couple vers un moteur à combustion interne (VM) externe à la transmission ainsi qu'une pluralité de trains planétaires (P1-P3 ; 2P1-2P5), la transmission (G) étant conçue pour produire une pluralité de rapports (1-8, 1R ; 21-28, 2R) entre l'arbre d'entraînement (GW1) et l'arbre de sortie (GW2) par fermeture sélective d'éléments de changement de vitesse (S1-S6 ; 2S1-2S5) formant un rapport,
- l'interface (GW1A) de transmission de couple étant reliée à l'arbre d'entraînement (GW1) en permanence de manière solidaire en rotation ou élastique rotation,
- l'arbre d'entraînement (GW1) et un élément (E1, 22E1) de l'un des trains planétaires (P3 ; 2P4) pouvant être amenés dans une relation de vitesse de rotation fixe l'un par rapport à l'autre par fermeture d'un premier des éléments de changement de vitesse (S1, n2S1) formant un rapport, lequel est réalisé sous forme d'élément de changement de vitesse à engagement par force présentant une capacité de transmission de couple variable,
- un autre élément (E2, 22E2a, 22E2b) de l'un des trains planétaires (P1, 2P3, 2P5) étant relié en permanence à un rotor (R) de la machine électrique (EM),
- le rotor (R) et l'arbre d'entraînement (GW1) pouvant être amenés dans une relation de vitesse de rotation fixe l'un par rapport à l'autre par fermeture d'un élément de changement de vitesse supplémentaire (ZS, 2ZSa, 2ZSb), lequel est réalisé sous forme d'élément de changement de vitesse à engagement par complémentarité de forme, **caractérisée en ce qu'**une liaison permanente existe entre l'arbre d'entraînement (GW1) et un élément (E3) de l'un des trains planétaires (2P5), un autre élément (E4) du même train planétaire (2P5) pouvant être fixé de manière solidaire en rotation par fermeture de l'élément de changement de vitesse supplémentaire (2ZSb).

2. Transmission (G) selon la revendication 1, **caractérisée en ce que** celui des trains planétaires (2P5), dont l'élément (E3) est relié en permanence à l'arbre d'entraînement (GW1) comprend l'élément (22E2b) auquel le rotor (R) est relié en permanence.

3. Chaîne cinématique pour un véhicule automobile, **caractérisée par** une transmission (G) selon l'une des revendications précédentes.

4. Procédé servant à faire fonctionner une transmission (G) selon la revendication 1 ou la revendication 2 ou une chaîne cinématique selon la revendication 3, **caractérisé en ce que**, par fermeture sélective des éléments de changement de vitesse (S1-S6 ; 2S1-2S5) formant un rapport, une pluralité de rapports (1-8, 1R ; 21-28, 2R) entre l'arbre d'entraînement (GW1) et l'arbre de sortie (GW2) peuvent être réalisés, l'élément de changement de vitesse supplémentaire (ZS, 2ZSa, 2ZSb) étant fermé dans chacun de ces rapports (1-8, 1R ; 21-28, 2R).
